# EUROPEAN PATENT APPLICATION

(11) **EP 1 106 645 A2**
(43) Date of publication of application: **13.06.2001**
(21) Application number: 00310799.2
(22) Date of filing: 05.12.2000
(51) Int. Cl.: C08J 7/04, C23C 18/44

(54) **Silver-plated laminated body and method of manufacturing same**

(30) Priority: 06.12.1999 JP 37634699
(71) Applicant: Ikuyo Co., Ltd, Tokyo 150-0002 (JP)
(72) Inventor: Sakai, Masayoshi, c/o Ikuyo Co., Ltd, Tokyo 150-0002 (JP)
(74) Representative: Abrams, Michael John

(57) **Abstract**

A silver-plated laminated body which is highly durable and can easily be manufactured has an undercoat layer, a silver-plated layer, a lower topcoat layer, and an upper topcoat layer which are successively disposed in the order named on a base of plastics. The undercoat layer comprises a coating film which is mainly made of an alkyd resin that is free of a catalyst. The silver-plated layer is formed by a silver mirror reaction. The lower topcoat layer comprises a coating film which is mainly made of polyester polyol. The upper topcoat layer comprises a coating film which is mainly made of polyester polyol containing a di-isocyanate compound as a hardener. The lower topcoat layer contains a colorant.

## Description

The present invention relates to a silver-plated laminated body formed on a base such as a synthetic resin and a method of manufacturing such a silver-plated laminated body.

The preservation of natural environments has been discussed as one of the most important tasks in recent years, and various proposals have been made to achieve this goal. One of the efforts is to select suitable plating processes for plating inner and outer panels for automobiles, utensils for everyday use, electric appliances for home use, etc. For example, since electric plating processes require costly plating facilities and result in environmental pollution, attention is being paid to chemical plating processes.

One of such chemical plating processes for plating bases of plastics, ceramics, metal, etc. is a process of forming a silver-plated layer by way of a silver mirror reaction. A known laminated body including a silver-plated layer produced by a silver mirror reaction is disclosed in Japanese laid-open patent publication No. 10-309774. The disclosed laminated body comprises, on a base of plastics, ceramics, metal, an undercoat layer comprising a coating film which is mainly made of an alkyd resin, a silver-plated layer formed by a silver mirror reaction, and a topcoat layer comprising a coating film which is mainly made of a modified silicone resin.

The above publication reveals that the alkyd resin of the undercoat layer should preferably contain one of alkoxy titanium ester and a silane coupling agent or an epoxy resin which has an epoxy group, as a catalyst for easy precipitation of silver.

According to the disclosure of the above publication, the laminated body is highly durable and has a sightly appearance because of the topcoat layer. The publication indicates that the modified silicone resin of the topcoat layer should preferably have a high modification ratio and be soft. The disclosure also mentions that since the modified silicone resin which has a high modification ratio and is soft can easily be scratched, a second layer made of a modified silicone resin which has a low modification ratio and is relatively hard is placed on a first layer which is made of a modified silicone resin which has a high modification ratio and is soft.

However, an analysis conducted by the inventor shows that the modified silicone resin with a low modification ratio is still susceptible to scratches and is not sufficiently durable. Furthermore, the alkyd resin which contains a catalyst of alkoxy titanium ester or the like has a short pot life and is difficult to handle because the catalyst tends to promote the hardening of the alkyd resin.

It is therefore desirable for the present invention to provide a silver-plated laminated body which is highly durable and can easily be manufactured. There is also provided a method of manufacturing such a silver-plated laminated body.

The afore-mentioned problems may be solved by employing a topcoat layer which is made of a polyurethane resin rather than a modified silicone resin. Since a polyurethane resin has a high surface hardness, is water-resistant, and can be coated to a large thickness, it is expected to be highly durable.

A polyurethane resin can be produced generally by reacting polyester polyol with a di-isocyanate compound as a hardener. It has been found that when a coating compound mainly made of polyester polyol containing a di-isocyanate compound as a hardener is directly coated on a silver-plated layer formed by way of a silver mirror reaction, the coating compound becomes small particles, and the coating film has an unsmooth surface and an unsightly appearance.

The inventor of the present invention has researched techniques which prevent the coating compound from becoming small particles. As a result, the inventor has found that the applied coating compound does not become small particles when a coating compound, which is mainly made of polyester polyol and contains no hardener, is coated on a silver-plated layer formed by way of a silver mirror reaction and then a coating compound mainly made of polyester polyol containing a di-isocyanate compound as a hardener, is coated on the previously coated film.

According to one aspect of the present invention, there is provided a silver-plated laminated body comprising a base, an undercoat layer disposed on the base and comprising a coating film which is mainly made of an alkyd resin that is free of a catalyst, a silver-plated layer disposed on the undercoat layer and formed by a silver mirror reaction, a lower topcoat layer disposed on the silver-plated layer and comprising a coating film which is mainly made of polyester polyol, and an upper topcoat layer disposed on the lower topcoat layer and comprising a coating film which is mainly made of polyester polyol containing a di-isocyanate compound as a hardener.

With the above structure of the silver-plated laminated body, the lower topcoat layer which comprises a coating film made mainly of polyester polyol that is free of a di-isocyanate compound as a hardener, is disposed on the base, and the coating film which is mainly made of polyester polyol containing a di-isocyanate compound as a hardener is disposed over the lower topcoat layer. Therefore, the di-isocyanate compound contained as a hardener in the upper topcoat layer is not held in contact with the silver-plated layer, preventing the coating compound or coating from becoming small particles.

Therefore, the surface of the upper topcoat layer made of a polyurethane resin that is formed by a reaction between the di-isocyanate compound and the polyester polyol is smooth and provides a sightly appearance. Since the silver-plated laminated body is protected by the upper topcoat layer that is made of the polyurethane resin which has a high surface hardness, is water-resistant, and can be coated to a large thickness, the silver-plated laminated body is highly durable.

The undercoat layer may comprise a coating film which is substantially made of only an alkyd resin that is free of a catalyst, but may contain known auxiliary components including an extender, a viscosity adjuster, etc.

The lower topcoat layer may comprise a coating film which is usually made of only polyester polyol, but may contain known auxiliary components including an extender, a viscosity adjuster, etc. The lower topcoat layer may contain a colorant to give a desired color to the silver-plated laminated body. The colorant may comprise any of various inks. The colorant may be contained in the upper topcoat layer, but may be contained in the lower topcoat layer preferably for light resistance as it is protected by the upper topcoat layer.

The upper topcoat layer may comprise a coating film which is substantially made of only a di-isocyanate compound as a hardener and polyester polyol, but contain known auxiliary components including an extender, a viscosity adjuster, etc.

The base may be made of plastics and preferably a plastics selected from the group consisting of an acrylonitrile styrene butadiene copolymer resin, a polycarbonate resin, and a polystyrene resin. The base may be used in a variety of objects such as inner and outer panels for automobiles, utensils for everyday use or electric appliances for home use, etc.

According to a second aspect of the present invention there is provided a method of manufacturing a silver-plated laminated body the method comprising the steps of: coating a surface of a base with a coating compound which is mainly made of an alkyd resin that is free of a catalyst, and drying the coating compound into an undercoat layer, coating a surface of the undercoat layer with an aqueous solution containing silver and a reducing agent, and drying the aqueous solution and the reducing agent into a silver-plated layer by way of a silver mirror reaction, coating a surface of the silver-plated layer with a coating compound which is mainly made of polyester polyol and drying the coating compound into a lower topcoat layer, and coating a surface of the lower topcoat layer with a coating compound which is mainly made of polyester polyol containing a di-isocyanate compound as a hardener, and drying the coating compound into an upper topcoat layer.

According to the above method, a surface of a base is coated with a coating compound which is mainly made of an alkyd resin that is free of a catalyst, and the coating compound is dried into an undercoat layer. When the coating compound which is mainly made of an alkyd resin is coated and dried on the base, it produces an undercoat layer which closely adheres to the base. Since the coating compound is mainly made of an alkyd resin and does not contact a catalyst such as alkoxy titanium ester or the like, it is not hardened too early, and hence can be handled with ease.

Then, a surface of the undercoat layer is coated with an aqueous solution containing silver and a reducing agent, and the aqueous solution and the reducing agent are dried. As a result, silver ions contained in the aqueous solution are reduced by the reducing agent, and silver is precipitated on the undercoat layer, producing a silver-plated layer by way of a silver mirror reaction.

Then, a surface of the silver-plated layer is coated with a coating compound which is mainly made of polyester polyol and the coating compound is dried into a lower topcoat layer. Because the coating compound of the lower topcoat layer does not contain a di-isocyanate compound as a hardener, it does not become small particles when coated on the silver-plated layer, and hence provides a highly smooth coating film.

Then, a surface of the lower topcoat layer is coated with a coating compound which is mainly made of polyester polyol containing a di-isocyanate compound as a hardener, and the coating compound is dried into an upper topcoat layer. Though the coating compound of the upper topcoat layer contains a di-isocyanate compound as a hardener, because the lower topcoat layer which is free of a di-isocyanate compound is interposed between the upper topcoat layer and the silver-plated layer, the di-isocyanate compound in the upper topcoat layer is prevented from directly contacting the silver-plated layer. Consequently, the coating compound of the upper topcoat layer is prevented from becoming small particles, and hence provides a highly smooth coating film.

The above and other features and advantages of the present invention will become apparent from the following description when taken in conjunction with the accompanying drawings which illustrate a preferred embodiment of the present invention by way of example.

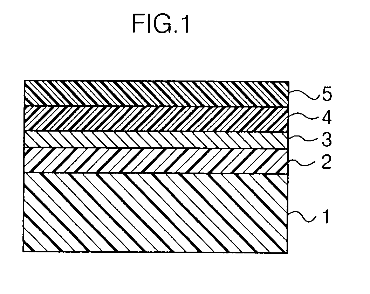

FIG. 1 is a schematic cross-sectional view of a silver-plated laminated body according to the present invention.

### DETAILED DESCRIPTION OF THE PREFERRED EMBODIMENT

As shown in FIG. 1, a silver-plated laminated body according to the present invention comprises, a base 1 of plastics, an undercoat layer 2 comprising a coating film which is mainly made of an alkyd resin that is free of catalyst, a silver-plated layer 3 formed by a silver mirror reaction, a lower topcoat layer 4 comprising a coating film which is mainly made of polyester polyol, and an upper topcoat layer 5 comprising a coating film which is mainly made of polyester polyol containing a di-isocyanate compound as a hardener. The undercoat layer 2, the silver-plated layer 3, the lower topcoat layer 4, and the upper topcoat layer 5 are successively arranged in the order named on the base 1.

The base 1 is used for example in inner and outer panels for automobiles, utensils for everyday use, electric appliances for home use, etc. The base 1 is made of a plastics selected from the group consisting of an acrylonitrile styrene butadiene copolymer resin, a polycarbonate resin, and a polystyrene resin.

The lower topcoat layer 4 may contain colorant such as an ink having a desired color to give the color to the silver-plated laminated body according to the present invention.

A method of manufacturing the silver-plated laminated body shown in FIG. 1 will be described below.

First, dirt and fats on the surface of the base 1 are removed by a solvent such as of isopropyl alcohol or the like. Then, electrostatic charges are removed from the surface of the base 1 by an electrostatic charge remover to prevent dirt from being attached again to the base 1.

Thereafter, the base 1 is coated with an alkyd resin coating compound mainly made of an alkyd resin to a thickness ranging from 5 to 10 µm by an air gun, for example, thus producing the undercoat layer 2. The alkyd resin coating compound comprises a mixed solvent of the alkyd resin, a solvent of aliphatic hydrocarbon, polyhydric alcohol, and polybasic acid, and does not contain a catalyst of alkoxy titanium ester or the like. The polyhydric alcohol may be glycerin, pentaerythritol, or the like. The polybasic acid may be phthalic acid, vegetable oil, etc. The alkyd resin coating compound may be diluted by a thinner comprising a solvent of aliphatic hydrocarbon and an alcohol-base solvent such as of isopropyl alcohol or the like. The alkyd resin coating compound may contain known auxiliary components including an extender, a viscosity adjuster, etc.

If the thickness of the undercoat layer 2 were less than 5 µm, then the undercoat layer 2 might not be uniform and could not be sufficiently bonded to the base 1. If the thickness of the undercoat layer 2 were in excess of 10 µm, then no sufficient oxygen would be available to harden the alkyd resin, and the undercoat layer 2 might not have a desired level of hardness.

The alkyd resin coating compound is dried in a drying furnace, for example, at 80 to 100°C for 60 to 90 minutes.

To treat the surface of the undercoat layer 2, it is coated with a solution of surface active agent to remove dirt therefrom. The solution of surface active agent may comprise a mixed solution of stannous chloride (SnCl₂·H₂O) and hydrochloric acid, for example. After dirt has been removed, pure water is applied to remove the solution of surface active agent from the undercoat layer 2 and uniformly wet the surface of the undercoat layer 2.

Then, a solution of silver nitrate and a solution of reducing agent are applied to the undercoat layer 2 by a double-headed air gun. Specifically, the solution of silver nitrate and the solution of reducing agent are supplied under pressure from respective tanks to the double-headed air gun where they are mixed together at its nozzle. Crystallized silver is applied under an air pressure of 5 kg/cm² or higher, for example, to the surface of the undercoat layer 2, forming a surface of crystallized silver which serves as the silver-plated layer 3.

The solution of silver nitrate and the solution of reducing agent may be a known combination of reagents for a silver mirror reaction. For example, the solution of silver nitrate may comprise a mixture of an ammoniacal solution of silver nitrate and a solution of ammonia and caustic soda, and the solution of reducing agent may comprise a solution of formalin, a solution of glyoxal, a solution of Rochelle salt, or the like.

When the solution of silver nitrate and the solution of reducing agent are washed away by pure water, a stable and sightly silver mirror surface (silver-plated layer 3) is produced. At this time, if there were silver particles remaining unfixed to the undercoat layer 2, then the adhesion of the silver-plated layer 3 would be lowered. Therefore, it is important to fully wash away any silver particles that remain unfixed to the undercoat layer 2. Any remaining pure water is then completely removed by an air blow. Then, the silver-plated layer 3 is dried by air at a temperature ranging from 30 to 40°C for 5 to 10 minutes.

Then, the silver-plated layer 3 is coated with a polyester polyol coating compound mainly made of polyester polyol to a thickness ranging from 10 to 20 µm by an air gun. The applied polyester polyol coating compound is dried into the lower topcoat layer 4. The polyester polyol coating compound comprises polyester polyol and a mixture of an ester-base solvent such as butyl acetate or the like, an aromatic hydrocarbon solvent such as xylene or the like, and a glycol-ester-base solvent, and does not contain a hardener of di-isocyanate compound. The polyester polyol coating compound may be diluted by a thinner comprising an ester-base solvent such as butyl acetate or the like, an aromatic hydrocarbon solvent such as xylene or the like, a glycol-ester-base solvent, and an aliphatic hydrocarbon solvent.

The polyester polyol coating compound may contain known auxiliary components including an extender, a viscosity adjuster, etc. The polyester polyol coating compound may be mixed with an ink of chromium, gold, red silver, or blue silver color to give a desired color to the silver-plated laminated body.

If the thickness of the lower topcoat layer 4 were less than 10 µm, then the lower topcoat layer 4 might not be sufficiently bonded to the silver-plated layer 3. If the thickness of the lower topcoat layer 4 were in excess of 10 µm, then the lower topcoat layer 4 might not have a desired level of hardness because the lower topcoat layer 4 does not contain a hardener.

The polyester polyol coating compound is dried by air at a temperature ranging from 30 to 40°C for 5 to 10 minutes.

Then, the lower topcoat layer 4 is coated with an urethane coating compound mainly made of polyester polyol which contains a di-isocyanate compound as a hardener, to a thickness ranging from 20 to 30 µm by an air gun, for example. The applied urethane coating compound is then dried into the upper topcoat layer 5. The urethane coating compound is the same as the polyester polyol coating compound of the lower topcoat layer 4 except that the urethane coating compound contains the hardener of di-isocyanate compound. The urethane coating compound may contain known auxiliary components including an extender, a viscosity adjuster, etc.

The polyester polyol and the di-isocyanate compound as the hardener are not limited to particular compounds, and may be any compounds insofar as they can produce a polyurethane resin through a reaction therebetween. The di-isocyanate compound may be hexamethylene di-isocyanate or the like. The di-isocyanate compound is dissolved in a solvent containing an ester-base solvent such as butyl acetate or the like, and then mixed with the polyester polyol.

In the urethane coating compound, the polyester polyol and the di-isocyanate compound are mixed with each other at such a ratio of 100 parts by weight of polyester polyol and 20 to 30 parts by weight of di-isocyanate compound. If the di-isocyanate compound were added as less than 20 parts by weight, then the upper topcoat layer 5 might not have a desired level of hardness. If the di-isocyanate compound were added as more than 30 parts by weight, then an unreacted isocyanate group would remain in the upper topcoat layer 5, possibly preventing the upper topcoat layer 5 from being sufficiently bonded to the lower topcoat layer 4.

The di-isocyanate compound mixed at the above ratio reacts with the polyester polyol in the upper topcoat layer 5, producing polyurethane to harden the upper topcoat layer 5. At this time, the di-isocyanate compound acts on the lower topcoat layer 4 to harden part of the lower topcoat layer 4 in the boundary region between the upper topcoat layer 5 and the lower topcoat layer 4. However, the di-isocyanate compound does not harden the lower topcoat layer 4 in its entirety and hence does not contact the silver-plated layer 3.

If the thickness of the upper topcoat layer 5 were less than 20 µm, then the upper topcoat layer 5 might not be sufficiently durable, failing to sufficiently protect the silver-plated layer 3, so that the silver-plated laminated body would not have a sightly appearance. If the thickness of the upper topcoat layer 5 were in excess of 30 µm, then it might fail to provide a sightly appearance due to dripping, lifting, etc., or its hardness would be excessively high to cause checking and cracking.

The upper topcoat layer 5 is dried in a drying furnace, for example, at 40 to 60°C for 60 to 90 minutes. It is preferable to dry the upper topcoat layer 5 at a temperature that is 15 to 30°C lower than when the undercoat layer 2 is dried, in order to prevent the silver-plated layer 3 from cracking due to expansion and contraction of the undercoat layer 2 with the applied heat.

Although a certain preferred embodiment of the present invention has been shown and described in detail, it should be understood that various changes and modifications may be made therein without departing from the scope of the appended claims.

## Claims

1. A silver-plated laminated body comprising:
a base (1);
an undercoat layer (2) disposed on said base (1) and comprising a coating film which is mainly made of an alkyd resin that is free of a catalyst;
a silver-plated layer (3)disposed on said undercoat layer (2) and formed by a silver mirror reaction;
a lower topcoat layer (4) disposed on said silver-plated layer (3) and comprising a coating film which is mainly made of polyester polyol; and
an upper topcoat layer (5)disposed on said lower topcoat layer (4) and comprising a coating film which is mainly made of polyester polyol containing a di-isocyanate compound as a hardener.

2. A silver-plated body according to claim 1, wherein said undercoat layer (2)comprises a coating film which is substantially made of only an alkyd resin that is free of a catalyst.

3. A silver-plated body according to claim 1, wherein said lower topcoat layer (4) comprises a coating film which is substantially made of only polyester polyol.

4. A silver-plated body according to claim 1, wherein said lower topcoat layer (4) contains a colorant.

5. A silver-plated body according to claim 1, wherein said upper topcoat layer (4) comprises a coating film which is substantially made of only a di-isocyanate compound as a hardener and polyester polyol.

6. A silver-plated body according to claim 1, wherein said base (1) is made of plastics.

7. A silver-plated body according to claim 1, wherein said base (1) is made of a plastics selected from the group consisting of an acrylonitrile styrene butadiene copolymer resin, a polycarbonate resin, and a polystyrene resin.

8. A method of manufacturing a silver-plated laminated body, comprising the steps of:
coating a surface of a base (1) with a coating compound which is mainly made of an alkyd resin that is free of a catalyst, and drying the coating compound into an undercoat layer (2);
coating a surface of said undercoat layer (2) with an aqueous solution containing silver and a reducing agent, and drying the aqueous solution and the reducing agent into a silver-plated layer (3) by way of a silver mirror reaction;
coating a surface of said silver-plated layer (3) with a coating compound which is mainly made of polyester polyol and drying the coating compound into a lower topcoat layer (4); and
coating a surface of said lower topcoat layer (4) with a coating compound which is mainly made of polyester polyol containing a di-isocyanate compound as a hardener, and drying the coating compound into an upper topcoat layer (5).

9. A method of manufacturing a silver-plated laminated body according to claim 8, further characterised by the features of any one of claims 2 to 7.
